# EUROPÄISCHE PATENTSCHRIFT

(11) **EP 3 833 565 B1**
(45) Veröffentlichungstag und Bekanntmachung des Hinweises auf die Patenterteilung: **01.03.2023**
(21) Anmeldenummer: 19725972.4
(22) Anmeldetag: 21.05.2019
(51) Int. Cl.: B60K 35/00, B60W 50/14

(54) **VERFAHREN UND ANZEIGEEINRICHTUNG ZUR VISUALISIERUNG EINER ANORDNUNG SOWIE WIRKUNGSWEISE VON UMFELDSENSOREN EINES KRAFTFAHRZEUGS**
METHOD AND A DISPLAY DEVICE FOR VISUALISING AN ARRANGEMENT AND METHOD OF OPERATION OF SURROUNDINGS SENSORS OF A MOTOR VEHICLE
PROCÉDÉ ET DISPOSITIF D'AFFICHAGE POUR VISUALISER UN AGENCEMENT ET LE MODE D'ACTION DE CAPTEURS D'ENVIRONNEMENT D'UN VÉHICULE AUTOMOBILE

(30) Priorität: 10.08.2018 DE 102018213554
(43) Veröffentlichungstag der Anmeldung: 16.06.2021
(60) Teilanmeldung: 23152298.8
(73) Patentinhaber: Audi AG, 85045 Ingolstadt (DE)
(72) Erfinder: KÜHNE, Marcus, 92339 Beilngries (DE)
(74) Vertreter: Hofstetter, Schurack & Partner
(86) Internationale Anmeldenummer: PCT/EP2019/063015
(87) Internationale Veröffentlichungsnummer: WO 2020/030313

(56) Entgegenhaltungen:
- DE-A1-102008 036 009
- DE-A1-102014 214 506
- DE-A1-102016 210 611
- US-A1- 2017 076 606
- US-A1- 2017 129 426

## Beschreibung

Die Erfindung betrifft ein Verfahren und eine Anzeigeeinrichtung zur Visualisierung einer Anordnung sowie Wirkungsweise von Umfeldsensoren eines Kraftfahrzeugs. Des Weiteren betrifft die Erfindung noch ein Kraftfahrzeug.

Mit dem zunehmenden Einsatz von autonomen Fahrmöglichkeiten bei Kraftfahrzeugen wird es sehr wichtig werden, die Funktionsweise autonomer Fahrzeuge und die sich daraus ergebende hohe Verlässlichkeit nahezubringen.

Die DE 10 2016 214 916 A1 zeigt ein Verfahren zum Betreiben eines Kraftfahrzeugs, bei welchem das Kraftfahrzeug autonom fährt und bei welchem auf einer Anzeige des Kraftfahrzeugs ein von dem Kraftfahrzeug gerade durchgeführtes oder bevorstehendes Manöver dargestellt wird. Sensorische Fähigkeiten des Kraftfahrzeugs können dabei mittels einer Anzeige für einen Fahrer sichtbar abgebildet werden.

Die DE 10 2013 021 853 A1 zeigt eine Vorrichtung und ein Verfahren zum Betreiben eines Autopiloten eines Fahrzeugs. Eine außerhalb des Fahrzeugs angeordnete Datenbrille dient zur Darstellung von Sensordaten des Fahrzeugs, wenn bei einem autonomen Fahrmanöver des Fahrzeugs ein Fehler auftritt.

Die DE 10 2011 121 948 A1 zeigt ein Verfahren, bei welchem eine Vorschau auf Aktionen eines autonomen Fahrsystems gegeben wird. Eine Anzeige eines Fahrzeugs dient dabei zur Darstellung eines geplanten autonomen Fahrmanövers des Fahrzeugs.

Die Visualisierung von Sensor-Betriebsinformationen ist bekannt aus der DE 10 2016 210611 A1, US 2017/129426 A1, US 2017/076606 A1 und DE 10 2008 036009 A1.

Die DE 10 2014 214506 A1 zeigt, dass in einem Kraftfahrzeug die von einem Radarsensor erfassten elektromagnetischen Radarwellen für einen Benutzer visualisiert werden können, um die korrekte Funktionsweise des Radarsensors zu demonstrieren.

Es ist die Aufgabe der vorliegenden Erfindung, eine Lösung bereitzustellen, mittels welcher auf besonders einfach nachvollziehbare Weise eine Funktionsweise eines zumindest teilautonom fahrenden Fahrzeugs visualisiert werden kann.

Diese Aufgabe wird durch ein Verfahren zum Betreiben eines Kraftfahrzeugs sowie durch eine Anzeigeeinrichtung mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben eines Kraftfahrzeugs wird während eines zumindest teilautonomen Fahrbetriebs des Kraftfahrzeugs mittels wenigstens einer im Kraftfahrzeug angeordneten Anzeigeeinrichtung eine Anordnung und Wirkungsweise von Umfeldsensoren des Kraftfahrzeugs visualisiert, deren Sensordaten beim zumindest teilautonomen Fahrbetrieb verwendet werden. Ein teilautonomer Fahrbetrieb bedeutet, dass das Kraftfahrzeug zumindest hinsichtlich der Längsführung oder der Querführung autonom agiert, ohne dass ein Fahrer diesbezüglich selbst steuernd eingreifen muss. Genauso ist es bei dem erfindungsgemäßen Verfahren aber auch möglich, dass bei einem vollautonomen Fahrbetrieb des Kraftfahrzeugs, also bei einem Fahrbetrieb, bei welchem ein Fahrer weder in die Längsführung noch in die Querführung eingreift, mittels der im Kraftfahrzeug angeordneten Anzeigeeinrichtung die Anordnung und Wirkungsweise der Umfeldsensoren des Kraftfahrzeugs visualisiert wird.

Der Erfindung liegt dabei die Erkenntnis zugrunde, dass es mit dem zunehmenden Einsatz des autonomen Fahrens sehr wichtig werden wird, Kunden, Mitarbeitern aber auch öffentlichen Personen, wie Journalisten, die Funktionsweise autonom fahrender Fahrzeuge und die sich daraus ergebende hohe Verlässlichkeit nahezubringen. Dadurch, dass mittels der im Kraftfahrzeug angeordneten Anzeigeeinrichtung sowohl die Anordnung als auch die Wirkungsweise der Umfeldsensoren des Kraftfahrzeugs visualisiert wird, deren Sensordaten beim zumindest teilautonomen Fahrbetrieb verwendet werden, kann bei Fahrzeuginsassen des Kraftfahrzeugs eine besonders hohe Akzeptanz für den teilautonomen Fahrbetrieb oder auch für einen vollautonomen Fahrbetrieb geschaffen werden. Es wird also eine räumlich korrekte Anordnung der Umfeldsensoren des Kraftfahrzeugs visualisiert, sodass ein Fahrzeuginsasse erkennen kann, wo die Umfeldsensoren des Kraftfahrzeugs angeordnet sind. Da zudem auch die Wirkungsweise dieser Umfeldsensoren visualisiert wird, kann der Fahrzeuginsasse auf einfache Weise erkennen, was das Kraftfahrzeug von seinem Umfeld detektiert. So ist es auch möglich, mittels der Anzeigeeinrichtung zu vermitteln, wie das Kraftfahrzeug bei dem zumindest teilautonomen Fahrbetrieb oder auch beim vollautonomen Fahrbetrieb die Sensordaten verarbeitet und in die teilautonome oder vollautonome Fahrbewegungen umsetzt. Dafür ist es vorgesehen, dass eine permanente Kommunikation beziehungsweise ein Datenaustausch zwischen der betreffenden Anzeigeeinrichtung und dem Kraftfahrzeug stattfindet, wie beispielsweise über ein geeignetes Interface, zum Beispiel in Form von Bluetooth oder dergleichen.

Die Erfindung sieht vor, dass mittels der Anzeigeeinrichtung eine jeweilige Positionierung der Umfeldsensoren am Kraftfahrzeug kenntlich gemacht sowie deren jeweilige Erfassungsbereiche visualisiert werden. Ein Fahrzeuginsasse kann also ganz einfach erkennen, wo die jeweiligen Umfeldsensoren des Kraftfahrzeugs angeordnet sind und welchen Erfassungsbereich diese überhaupt abdecken können. Insbesondere wenn die Erfassungsbereiche relativ groß sind, kann dies dazu beitragen, dass der Fahrzeuginsasse besonders beruhigt ist, wenn das Kraftfahrzeug teilautonom oder autonom fährt, da der Fahrzeuginsasse ja angezeigt bekommt, wie viel das Kraftfahrzeug tatsächlich von seiner Umgebung sensorisch erkennen kann.

In der Erfindung ist es vorgesehen, dass falls es sich bei zumindest einem der Umfeldsensoren um einen Radarsensor handelt, jeweilige Radarwellen mittels der Anzeigeeinrichtung visualisiert werden. Insbesondere ist es auch möglich, dass die Radarwellen, welche von einem fahrzeugexternen Objekt zum Radarsensor zurück reflektiert werden, mittels der Anzeigeeinrichtung visualisiert werden. Im Falle eines oder mehrerer Radarsensoren zur Umfelderkennung kann der Fahrzeuginsasse also sowohl einen Sichtbereich der betreffenden Sensorik als auch eine Interaktion mit der Umgebung in Form der zurückgeworfenen beziehungsweise reflektierten Radarwellen erkennen. Die Wirkungsweise der betreffenden Umfeldsensoren kann so besonders gut vom Fahrzeuginsassen verstanden werden. Ganz allgemein ist es möglich, unabhängig vom jeweiligen Typ des Umfeldsensors eine jeweilige Wirkungsweise des Umfeldsensors insbesondere mit Hilfe von weiterführenden Animationen in einem Außenbereich des Kraftfahrzeugs zu vermitteln, sodass der Fahrzeuginsasse erkennen kann, wie jeweilige Sensordaten verarbeitet und beim teilautonomen oder vollautonomen Fahrbetrieb in eine Fahrbewegung umgesetzt werden.

Eine vorteilhafte Ausführungsform der Erfindung sieht vor, dass es sich bei der Anzeigeeinrichtung um eine Augmented-Reality-Brille, eine Augmented-Reality-Kontaktlinse, eine Virtual-Reality-Brille oder eine Anzeigeeinrichtung des Kraftfahrzeugs, insbesondere eine kontaktanaloge Anzeigeeinrichtung, handelt. Mittels einer Augmented-Reality-Brille ist es möglich, dass der Fahrzeuginsasse weiterhin seine Umgebung wahrnimmt, wobei Informationen zur Anordnung und Wirkungsweise der Umfeldsensoren einfach eingeblendet werden. Schaut der Fahrzeuginsasse bei aufgesetzter Augmented-Reality-Brille beispielsweise nach vorne, so zeigt die Augmented-Reality-Brille beispielsweise einen im vorderen Bereich des Kraftfahrzeugs angeordneten Sensor als Icon oder dergleichen an. Zudem kann die Augmented-Reality-Brille noch die Wirkungsweise des betreffenden Sensors durch entsprechende Überblendung der Realität mit virtuellen Inhalten visualisieren. Dreht der Fahrzeuginsasse bei aufgesetzter Augmented-Reality-Brille seinen Kopf beispielsweise nach links, so sieht er wiederum beispielsweise ein Icon der dergleichen, welches einen Sensor und seine Positionierung kennzeichnet, der seitlich am Kraftfahrzeug angeordnet ist, um die Fahrzeugumgebung zur Seite hin zu überwachen. Das gleiche kann auch mit einer Augmented-Reality-Kontaktlinse oder einer kontaktanalogen Anzeigeeinrichtung erfolgen. Bei der kontaktanalogen Anzeigeeinrichtung kann es sich beispielsweise um ein Head-up-Display oder auch um in jeweilige Scheiben der Kraftfahrzeugs integrierte Anzeigeeinrichtungen handeln. Mittels der Augmented-Reality-Brille, der Augmented-Reality-Kontaktlinse und der kontaktanalogen Anzeigeeinrichtungen ist es also möglich, dass der betreffende Fahrzeuginsasse seine reale Umgebung noch wahrnimmt, wobei mittels dieser Anzeigemittel die Anordnung und Wirkungsweise der Umfeldsensoren des Kraftfahrzeugs als Überblendung der Realität visualisiert werden können. Es ist auch möglich, dass der Fahrzeuginsasse, insbesondere wenn es sich um einen Beifahrer und nicht den Fahrer handelt, eine Virtual-Reality-Brille aufgesetzt hat und wobei mittels dieser die Anordnung und Wirkungsweise der Umfeldsensoren des Kraftfahrzeugs visualisiert wird.

Gemäß einer weiteren vorteilhaften Ausführungsform der Erfindung ist es vorgesehen, dass ein jeweiliges Sensorwirkprinzip der Umfeldsensoren mittels der Anzeigeeinrichtung visualisiert wird. So kann der Fahrzeuginsasse auf einfache Weise erkennen, ob es sich bei den jeweiligen Umfeldsensoren beispielsweise um Kameras, Lidarsensoren, Radarsensoren, Infrarotsensoren und dergleichen handelt. Dies kann zum Beispiel durch Einblendung geeigneter Symbole entsprechend des jeweiligen Sensorwirkprinzips an der Stelle erfolgen, wo der jeweilige Umfeldsensor tatsächlich angeordnet ist. Somit kann der Fahrzeuginsasse besonders einfach nachvollziehen, welches Sensorwirkprinzip den jeweiligen Umfeldsensoren zugrunde liegt, was ebenfalls dazu beitragen kann, dass der Fahrzeuginsasse den teilautonomen oder auch vollautonomen Fahrbetrieb des Kraftfahrzeugs besonders gut akzeptiert.

Eine weitere vorteilhafte ausführungsform der Erfindung sieht vor, dass die Visualisierung der Anordnung und Wirkungsweise der Umfeldsensoren des Kraftfahrzeugs automatisch gestartet wird, sobald das Kraftfahrzeug von einem manuellen Fahrmodus in zumindest einen teilautonomen Fahrmodus wechselt. Sobald ein Fahrer das Kraftfahrzeug also nicht mehr vollständig selbst steuert, sei es die Längssteuerung und/oder die Quersteuerung, so startet die Visualisierung der Anordnung und Wirkungsweise der Umfeldsensoren. Dadurch wird dem Fahrer und gegebenenfalls auch weiteren Fahrzeuginsassen ein besonders sicheres Gefühl vermittelt, da die Fahrzeuginsassen direkt erkennen können, wie die Umfeldsensoren des Kraftfahrzeugs angeordnet sind und wirken, wenn das Kraftfahrzeug nicht mehr manuell gesteuert wird. Natürlich ist es auch möglich, das automatische Starten dieser Visualisierung zu unterbinden, beispielsweise über ein entsprechendes Menü in einem Infotainmentsystem des Kraftfahrzeugs, sodass ein Fahrzeuginsasse auswählen kann, ob er das automatische Starten der Visualisierung der Anordnung und Wirkungsweise der Umfeldsensoren möchte oder nicht.

Die erfindungsgemäße Anzeigeeinrichtung ist in einem Kraftfahrzeug anordnenbar und dazu eingerichtet, während eines zumindest teilautonomen Fahrbetriebs des Kraftfahrzeugs eine Anordnung und Wirkungsweise von Umfeldsensoren des Kraftfahrzeugs zu visualisieren, deren Sensordaten beim zumindest teilautonomen Fahrbetrieb verwendet werden. Bei der Anzeigeeinrichtung kann es sich um eine Augmented-Reality-Brille, eine Augmented-Reality-Kontaktlinse, eine Virtual-Reality-Brille oder eine Anzeigeeinrichtung, welche im Kraftfahrzeug verbaut werden kann, handeln. Bei letzterer kann es sich insbesondere um eine kontaktanaloge Anzeigeeinrichtung handeln. Vorteilhafte Ausgestaltungen des erfindungsgemäßen Verfahrens sind als vorteilhafte Ausgestaltungen der erfindungsgemäßen Anzeigeeinrichtung und umgekehrt anzusehen, wobei die Anzeigeeinrichtung insbesondere Mittel zur Durchführung der Verfahrensschritte aufweist.

Eine vorteilhafte Ausführungsform der Anzeigeeinrichtung sieht vor, dass die Anzeigeeinrichtung eine Datenschnittstelle zum drahtlosen Empfangen von Daten vom Kraftfahrzeug aufweist, welche die Anordnung und Wirkungsweise der Umfeldsensoren des Kraftfahrzeugs charakterisieren. Bei der Schnittstelle kann es sich beispielsweise um ein Funkmodul handeln, mittels welchem eine Kommunikation zwischen Kraftfahrzeug und Anzeigeeinrichtung via Bluetooth oder beispielsweise WLAN möglich ist. Über die Schnittstelle ist es besonders einfach, die besagten Daten vom Kraftfahrzeug, welche die Anordnung und Wirkungsweise der Umfeldsensoren des Kraftfahrzeugs charakterisieren, an die Anzeigeeinrichtung zu übertragen. Insbesondere wenn es sich um eine mobile Anzeigeeinrichtung, wie zum Beispiel eine Augmented-Reality-Datenbrille oder dergleichen handelt, muss die Anzeigeeinrichtung nicht erst aufwändig verkabelt beziehungsweise kabelgebunden mit dem Kraftfahrzeug verbunden werden, um die Daten empfangen zu können.

Das erfindungsgemäße Kraftfahrzeug ist dazu ausgelegt, zumindest teilautonom zu fahren und weist eine Datenschnittstelle zum drahtlosen Aussenden von Daten an die vorstehend genannte Anzeigeeinrichtung auf, wobei die Daten eine Anordnung und Wirkungsweise von Umfeldsensoren des Kraftfahrzeugs charakterisieren, deren Sensordaten das Kraftfahrzeug beim zumindest teilautonomen Fahrbetrieb verwendet.

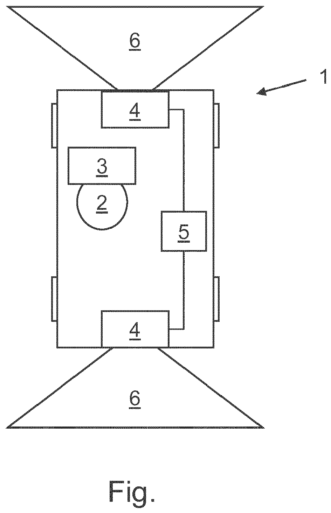

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine stark schematisierte Darstellung eines Kraftfahrzeugs, in welchem ein Fahrzeuginsasse mit aufgesetzter Augmented-Reality-Brille sitzt, mittels welcher eine Anordnung und Wirkungsweise von Umfeldsensoren des Kraftfahrzeugs visualisiert werden.

Ein Kraftfahrzeug 1 ist in einer stark schematisierten Darstellung in der einzigen Figur gezeigt. In dem Kraftfahrzeug 1 sitzt ein Fahrzeuginsasse 2 mit einer aufgesetzten Augmented-Reality-Brille 3. Das Kraftfahrzeug 1 umfasst mehrere nur schematisch angedeutete Umfeldsensoren 4 sowie eine fahrzeugseitige Datenschnittstelle 5 zum drahtlosen Aussenden von Daten an die Augmented-Reality-Brille 3, wobei die Daten eine Anordnung und Wirkungsweise der Umfeldsensoren 4 des Kraftfahrzeugs 1 charakterisieren, deren Sensordaten das Kraftfahrzeug 1 beim teilautonomen und vollautonomen Fahrbetrieb verwendet. Die Augmented-Reality-Brille 3 weist ebenfalls eine hier nicht näher dargestellte Datenschnittstelle auf, welche mit der Datenschnittstelle 5 des Kraftfahrzeugs 1 drahtlos kommunizieren kann, um die besagten Daten zu empfangen.

Sobald das Kraftfahrzeug 1 teilautonom oder vollautonom fährt, werden mittels der Augmented-Reality-Brille 3 sowohl die Anordnung als auch die Wirkungsweise der Umfeldsensoren 4 des Kraftfahrzeugs 1 visualisiert. Mittels der Augmented-Reality-Brille 3 wird beispielsweise eine jeweilige Positionierung der Umfeldsensoren 4 am Kraftfahrzeug 1 kenntlich gemacht. Blickt der Fahrzeuginsasse 2 durch die Augmented-Reality-Brille 3 nach vorne, so bekommt er beispielsweise über ein entsprechendes virtuelles Symbol, welches mittels der Augmented-Reality-Brille 3 eingeblendet wird, die Position des vorderen Umfeldsensors 4 kenntlich gemacht.

Blickt der Fahrzeuginsasse 2 durch Verschwenken seines Kopfs nach hinten, so bekommt er beispielsweise wiederum durch ein anderes Symbol die Positionierung des hinteren Umfeldsensors 4 kenntlich gemacht. Zudem macht die Augmented-Reality-Brille 3 auch jeweilige Erfassungsbereiche 6 der Umfeldsensoren 4 kenntlich. Blickt der Fahrzeuginsasse 2 durch eine Windschutzscheibe des Kraftfahrzeugs 1 nach vorne, so blendet die Augmented-Reality-Brille 3 den Erfassungsbereich 6 ein, sodass der Fahrzeuginsasse 2 beim Blick nach vorne erkennen kann, wie weit der Umfeldsensor 4 beispielsweise nach vorne blicken und die Fahrzeugumgebung erfassen kann. Das gleiche gilt auch für den hinteren Umfeldsensor 4.

Natürlich kann das Kraftfahrzeug 1 auch weitere hier nicht dargestellte Umfeldsensoren aufweisen, welche beispielsweise einen seitlichen Umfeldbereich des Kraftfahrzeugs 1 erfassen und abdecken. Ein jeweiliges Sensorwirkprinzip der Umfeldsensoren 4 wird mittels der Augmented-Reality-Brille 3 ebenfalls visualisiert . Handelt es sich beispielsweise bei den Umfeldsensoren 4 um Radarsensoren, so werden animierte Radarwellen mittels der Augmented-Reality-Brille 3 visualisiert. Diese werden mittels der Augmented-Reality-Brille 3 beispielsweise so angezeigt, dass sie den Erfassungsbereich 6 kenntlich machen. Alternativ ist es auch möglich, dass der Erfassungsbereich 6 als eine Art Kegel eingeblendet wird, wobei die Radarwellen zusätzlich noch angezeigt werden. Zudem kann es auch vorgesehen sein, dass die Radarwellen, welche von einem fahrzeugexternen Objekt zum betreffenden als Radarsensor ausgebildeten Umfeldsensor 4 zurück reflektiert werden, mittels der Augmented-Reality-Brille 3 visualisiert werden.

Der Fahrzeuginsasse 2 kann mittels der Augmented-Reality-Brille 3 also während der Fahrt die für die teil- oder vollautonome Fahrt erforderlichen Umfeldsensoren 4 räumlich korrekt verortet angezeigt bekommen. Zudem ist es auch möglich, die Wirkungsweise in der visuellen Darstellung kenntlich zu machen, sowie auch mittels weiterführender Animationen im Außenbereich des Kraftfahrzeugs 1 vermittelt wird, wie das Kraftfahrzeugs 1 die vorliegenden Sensordaten verarbeitet und in die teilautonome oder vollautonome Fahrbewegung umsetzt.

Vor allem kann es auch vorgesehen sein, dass die Visualisierung der Anordnung und Wirkungsweise der Umfeldsensoren 4 des Kraftfahrzeugs 1 automatisch gestartet wird, sobald das Kraftfahrzeug 1 von einem manuellen Fahrmodus in einen teilautonomen oder vollautonomen Fahrmodus wechselt.

Die vorstehend erläuterte Funktionsweise ist nicht nur auf die Augmented-Reality-Brille 3 beschränkt. Statt der Augmented-Reality-Brille 3 können beispielsweise auch Augmented-Reality-Kontaktlinsen, Virtual-Reality-Brillen oder verschiedenste Anzeigeeinrichtungen, die im Kraftfahrzeug 1 verbaut sind, zum Einsatz kommen. Bei letzterem können insbesondere kontaktanaloge Anzeigeeinrichtungen sehr hilfreich sein. So kann beispielsweise ein kontaktanaloges Head-up-Display verwendet werden, um die Anordnung und Wirkungsweise der Umfeldsensoren 4 zu visualisieren. Die Kontaktanalogie ist eine spezielle Form der Augmented Reality. Hier verschmelzen die eingeblendeten Informationen mit der Umwelt. Die eingeblendeten Informationen erscheinen perspektivisch korrekt an dem Ort, auf den sie sich jeweils beziehen und haften Objekten in der Umgebung quasi an. Mittels kontaktanalogen fahrzeugseitigen Anzeigeeinrichtungen ist es also möglich, die Anordnung und Wirkungsweise der Umfeldsensoren 4 des Kraftfahrzeugs 1 auch ohne zusätzlich aufzusetzende Hilfsmittel zu visualisieren.

Insgesamt wird durch das erläuterte Verfahren das Sicherheitsgefühl bei Fahrzeuginsassen 2 beim teilautonomen oder vollautonomen Fahren verbessert, da Fahrzeuginsassen 2 sowohl die Anordnung als auch Wirkungsweise der Umfeldsensoren 4 des Kraftfahrzeugs 1 erkennen können, deren Sensordaten beim teilautonomen oder vollautonomen Fahrbetrieb verwendet werden.

## Patentansprüche

1. Verfahren zum Betreiben eines Kraftfahrzeugs (1), bei welchem während eines zumindest teilautonomen Fahrbetriebs des Kraftfahrzeugs (1) mittels wenigstens einer im Kraftfahrzeug (1) angeordneten Anzeigeeinrichtung (3) eine Anordnung und Wirkungsweise von Umfeldsensoren (4) des Kraftfahrzeugs (1) visualisiert wird, deren Sensordaten beim zumindest teilautonomen Fahrbetrieb verwendet werden, wobei
es sich bei zumindest einem der Umfeldsensoren (4) um einen Radarsensor handelt, und jeweilige Radarwellen mittels der Anzeigeeinrichtung (3) visualisiert werden,
**dadurch gekennzeichnet, dass**
mittels der Anzeigeeinrichtung (3) eine jeweilige Positionierung der Umfeldsensoren (4) am Kraftfahrzeug (1) kenntlich gemacht sowie deren jeweilige Erfassungsbereiche (6) visualisiert werden.

2. Verfahren nach Anspruch 1,
**dadurch gekennzeichnet, dass**
es sich bei der Anzeigeeinrichtung (3) um eine Augmented-Reality-Brille, eine Augmented-Reality-Kontaktlinse, eine Virtual-Reality-Brille oder eine Anzeigeeinrichtung des Kraftfahrzeugs (1), insbesondere eine kontaktanaloge Anzeigeeinrichtung, handelt.

3. Verfahren nach einem der vorhergehenden Ansprüche,
**dadurch gekennzeichnet, dass**
ein jeweiliges Sensorwirkprinzip der Umfeldsensoren (4) mittels der Anzeigeeinrichtung (3) visualisiert wird.

4. Verfahren nach einem der vorhergehenden Ansprüche,
**dadurch gekennzeichnet, dass**
die Radarwellen, welche von einem fahrzeugexternen Objekt zum Radarsensor zurück reflektiert werden, mittels des Anzeigeeinrichtung (3) visualisiert werden.

5. Verfahren nach einem der vorhergehenden Ansprüche,
**dadurch gekennzeichnet, dass**
die Visualisierung der Anordnung und Wirkungsweise der Umfeldsensoren (4) des Kraftfahrzeugs (1) automatisch gestartet wird, sobald das Kraftfahrzeug (1) von einem manuellen Fahrmodus in zumindest einen teilautonomen Fahrmodus wechselt.

6. Anzeigeeinrichtung (3), welche in einem Kraftfahrzeug (1) anordnenbar und dazu eingerichtet ist, während eines zumindest teilautonomen Fahrbetriebs des Kraftfahrzeugs (1) eine Anordnung und Wirkungsweise von Umfeldsensoren (4) des Kraftfahrzeugs (1) zu visualisieren, deren Sensordaten beim zumindest teilautonomen Fahrbetrieb verwendet werden, wobei, die Anzeigeeinrichtung (3) so eingerichtet ist, dass es
sich bei zumindest einem der Umfeldsensoren (4) um einen Radarsensor handelt und jeweilige Radarwellen mittels der Anzeigeeinrichtung (3) visualisiert werden,
**dadurch gekennzeichnet, dass**
die Anzeigeeinrichtung (3) dazu eingerichtet ist, mittels der Anzeigeeinrichtung (3) eine jeweilige Positionierung der Umfeldsensoren (4) am Kraftfahrzeug (1) kenntlich zu machen sowie deren jeweilige Erfassungsbereiche (6) zu visualisieren.

7. Anzeigeeinrichtung (3) nach Anspruch 6,
**dadurch gekennzeichnet, dass**
die Anzeigeeinrichtung (3) eine Datenschnittstelle (5) zum drahtlosen Empfangen von Daten vom Kraftfahrzeug (1) aufweist, welche die Anordnung und Wirkungsweise der Umfeldsensoren (4) des Kraftfahrzeugs (1) charakterisieren.

8. Kraftfahrzeug (1), welches dazu ausgelegt ist, zumindest teilautonom zu fahren,
**dadurch gekennzeichnet, dass**
das Kraftfahrzeug (1) eine Datenschnittstelle (5) zum drahtlosen Aussenden von Daten an eine Anzeigeeinrichtung (3) nach Anspruch 6 oder 7 aufweist, wobei die Daten eine Anordnung und Wirkungsweise von Umfeldsensoren (4) des Kraftfahrzeugs (1) charakterisieren, deren Sensordaten das Kraftfahrzeug (1) beim zumindest teilautonomen Fahrbetrieb verwendet.

## Claims

1. A method for operating a motor vehicle (1), in which during an at least partially autonomous drive operation of the motor vehicle (1), an arrangement and mode of action of environmental sensors (4) of the motor vehicle (1), the sensor data of which is used in the at least partially autonomous drive operation, are visualized by means of at least one display device (3) arranged in the motor vehicle (1), wherein
at least one of the environmental sensors (4) is a radar sensor, and respective radar waves are visualized by means of the display device (3), **characterized in that**
a respective positioning of the environmental sensors (4) at the motor vehicle (1) is indicated as well as the respective capturing ranges (6) thereof are visualized by means of the display device (3).

2. The method according to claim 1,
**characterized in that**
the display device (3) is augmented reality glasses, an augmented reality contact lens, virtual reality glasses or a display device of the motor vehicle (1), in particular a contact-analogue display device.

3. The method according to any one of the preceding claims,
**characterized in that**
a respective sensor principle of action of the environmental sensors (4) is visualized by means of the display device (3).

4. The method according to any one of the preceding claims,
**characterized in that**
the radar waves, which are reflected back from an object external to vehicle to the radar sensor, are visualized by means of the display device (3).

5. The method according to any one of the preceding claims,
**characterized in that**
the visualization of the arrangement and mode of action of the environmental sensors (4) of the motor vehicle (1) is automatically started as soon as the motor vehicle (1) changes from a manual drive mode to at least a partially autonomous drive mode.

6. A display device (3), which can be arranged in a motor vehicle (1) and is configured, during an at least partially autonomous drive operation of the motor vehicle (1), to visualize an arrangement and mode of action of environmental sensors (4) of the motor vehicle (1), the sensor data of which is used in the at least partially autonomous drive operation, wherein the display device (3) is configured such that at least one of the environmental sensors (4) is a radar sensor and respective radar waves are visualized by means of the display device (3),
**characterized in that**
the display device (3) is configured to indicate a respective positioning of the environmental sensors (4) at the motor vehicle (1) as well as to visualize the respective capturing ranges (6) thereof by means of the display device (3).

7. The display device (3) according to claim 6,
**characterized in that**
the display device (3) comprises a data interface (5) for wirelessly receiving data from the motor vehicle (1), which characterizes the arrangement and mode of action of the environmental sensors (4) of the motor vehicle (1).

8. A motor vehicle (1), which is configured to at least partially autonomously drive,
**characterized in that**
the motor vehicle (1) comprises a data interface (5) for wirelessly emitting data to a display device (3) according to claim 6 or 7, wherein the data characterizes an arrangement and mode of action of environmental sensors (4) of the motor vehicle (1), the sensor data of which the motor vehicle (1) uses in the at least partially autonomous drive operation.

## Revendications

1. Procédé pour faire fonctionner un véhicule à moteur (1), dans lequel pendant une conduite au moins partiellement autonome du véhicule à moteur (1), une disposition et un fonctionnement de capteurs ambiants (4) du véhicule à moteur (1) sont visualisés au moyen d'au moins un dispositif d'affichage (3) agencé dans le véhicule à moteur (1), les données de capteur des capteurs ambiants étant utilisées en conduite au moins partiellement autonome, au moins un des capteurs ambiants (4) étant un capteur radar et des ondes radar respectives étant visualisées au moyen du dispositif d'affichage (3),
**caractérisé en ce que**
un positionnement respectif des capteurs ambiants (4) sur le véhicule à moteur (1) est indiqué clairement et leurs portées de détection (6) respectives sont visualisées au moyen du dispositif d'affichage (3).

2. Procédé selon la revendication 1,
**caractérisé en ce que**
le dispositif d'affichage (3) comprend des lunettes de réalité augmentée, une lentille de contact de réalité augmentée, des lunettes de réalité virtuelle ou un dispositif d'affichage du véhicule à moteur (1), en particulier un dispositif d'affichage analogue de contact.

3. Procédé selon l'une des revendications précédentes,
**caractérisé en ce que**
un principe de fonctionnement de capteur respectif des capteurs ambiants (4) est visualisé au moyen du dispositif d'affichage (3).

4. Procédé selon l'une des revendications précédentes,
**caractérisé en ce que**
les ondes radar qui sont réfléchies par un objet externe au véhicule en retour vers le capteur radar sont visualisées au moyen du dispositif d'affichage (3).

5. Procédé selon l'une des revendications précédentes,
**caractérisé en ce que**
la visualisation de la disposition et du fonctionnement des capteurs ambiants (4) du véhicule à moteur (1) est démarrée automatiquement dès que le véhicule à moteur (1) passe d'un mode de conduite manuel à un mode de conduite au moins partiellement autonome.

6. Dispositif d'affichage (3) pouvant être agencé dans un véhicule à moteur (1) et configuré pour visualiser une disposition et un fonctionnement de capteurs ambiants (4) du véhicule à moteur (1) pendant une conduite au moins partiellement autonome du véhicule à moteur (1), les données de capteur des capteurs ambiants étant utilisées en conduite au moins partiellement autonome, le dispositif d'affichage (3) étant configuré de sorte qu'au moins un des capteurs d'environnement (4) est un capteur radar et des ondes radar respectives du dispositif d'affichage (3) sont visualisées au moyen du dispositif d'affichage (3),
**caractérisé en ce que**
le dispositif d'affichage (3) est configuré pour indiquer clairement un positionnement respectif des capteurs ambiants (4) sur le véhicule à moteur (1) ainsi que pour visualiser leurs portées de détection (6) respectives au moyen du dispositif d'affichage (3).

7. Dispositif d'affichage (3) selon la revendication 6,
**caractérisé en ce que**
le dispositif d'affichage (3) comporte une interface de données (5) pour recevoir des données du véhicule à moteur (1) de manière sans fil, lesquelles données caractérisant la disposition et le fonctionnement des capteurs ambiants (4) du véhicule à moteur (1).

8. Véhicule à moteur (1) conçu pour conduire de manière au moins partiellement autonome,
**caractérisé en ce que**
le véhicule à moteur (1) comporte une interface de données (5) pour transmettre des données de manière sans fil à un dispositif d'affichage (3) selon la revendication 6 ou 7, les données caractérisant une disposition et un fonctionnement de capteurs ambiants (4) du véhicule à moteur (1), le véhicule à moteur (1) utilisant les données de capteur en conduite au moins partiellement autonome.
